# FASCICULE DE BREVET EUROPEEN

(11) **EP 4 457 037 B1**
(45) Date de publication et mention de la délivrance du brevet: **29.10.2025**
(21) Numéro de dépôt: 22769179.7
(22) Date de dépôt: 24.08.2022
(51) Int. Cl.: B07C 1/02, B25J 9/00, B25J 9/16, B25J 19/02, B65G 21/14, B65G 43/08, B65G 49/08, B65G 61/00

(54) **PROCÉDÉ DE TRI DE COLIS POUR ALIMENTER UN CONVOYEUR D'INJECTION DEPUIS UN CONVOYEUR D'ALIMENTATION RÉTRACTABLE ET INSTALLATION DE TRI DE COLIS POUR LA MISE EN OEUVRE D'UN TEL PROCÉDÉ**
PAKETSORTIERVERFAHREN ZUR BESCHICKUNG EINES INJEKTIONSFÖRDERERS VON EINEM EINZIEHBAREN ZUFÜHRFÖRDERER UND PAKETSORTIERANLAGE ZUR DURCHFÜHRUNG EINES SOLCHEN VERFAHRENS
PARCEL SORTING METHOD FOR FEEDING AN INJECTION CONVEYOR FROM A RETRACTABLE FEED CONVEYOR AND PARCEL SORTING INSTALLATION FOR CARRYING OUT SUCH A METHOD

(30) Priorité: 28.12.2021 FR 2114581
(43) Date de publication de la demande: 06.11.2024
(73) Titulaire: Solystic, 92227 Bagneux (FR)
(72) Inventeur: SAMAIN, Stéphane, 26120 CHABEUIL (FR); BLACHE, Richard, 07610 LEMPS (FR); BREYSSE, Steve, 07800 SAINT-GEORGES-LES-BAINS (FR); ROCH, Olivier, 07800 SAINT-GEORGES-LES-BAINS (FR)
(74) Mandataire: IP Trust
(86) Numéro de dépôt international: PCT/EP2022/073593
(87) Numéro de publication internationale: WO 2023/126080

(56) Documents cités:
- US-A- 5 638 938
- US-A1- 2018 345 324
- US-A1- 2020 377 309

## Description

### Domaine technique

L'invention concerne le domaine du tri de colis et plus particulièrement un procédé de tri de colis pour alimenter en colis un convoyeur d'injection de colis à partir d'un vrac de colis convoyés sur un convoyeur d'alimentation ainsi qu'une installation de tri de colis pour la mise en œuvre d'un tel procédé.

### Technique antérieure

Les plateformes logistiques utilisent aujourd'hui des installations de tri de colis conçues pour alimenter en colis des convoyeurs de tri de manière automatisée, telle que l'installation de tri décrite dans le brevet US2020/0377309.

Ce type d'installation comprend généralement un convoyeur d'alimentation conçu pour convoyer un vrac de colis selon une certaine direction de convoyage vers un convoyeur d'injection.

Un robot préhenseur, piloté par une unité de contrôle-commande, vient ensuite récupérer un par un les colis du vrac de colis pour les déposer sur le convoyeur d'injection.

L'unité de contrôle-commande est spécifiquement paramétrée pour identifier un colis à individualiser parmi les colis du vrac de colis à partir d'une image numérique prise par une caméra disposée au dessus du convoyeur d'alimentation.

Il arrive cependant que l'unité de contrôle-commande n'identifie aucun colis pouvant être individualisé dans l'image numérique. La plupart du temps cela est dû à l'absence de colis présentant une face de préhension sur le dessus non recouverte par un autre colis. Il est évident qu'une mauvaise préhension du colis par le robot préhenseur augmentera le risque de chute du colis lors de son transfert du convoyeur d'alimentation vers le convoyeur d'injection.

Il arrive également que les colis soient trop serrés les uns aux autres de sorte que le robot préhenseur ne puisse saisir le colis à individualiser sans saisir d'autres colis en même temps. On comprend ici que la dépose simultanée de plusieurs colis sur le convoyeur d'injection par le robot préhenseur ne permettra pas d'injecter des colis en série sur le convoyeur de tri principal.

On notera également que l'agencement trop serré entre les colis augmente le risque de détérioration des colis jouxtant le colis à individualiser lors de sa préhension par le robot préhenseur.

Ainsi, pour éviter tout disfonctionnement lors du transfert de colis du convoyeur d'alimentation vers le convoyeur d'injection, l'installation de tri décrite dans le brevet US2020/0377309 prévoit un mécanisme de rejet des colis du vrac de colis non individualisables fonctionnant avec une palette déplacée transversalement à la direction de convoyage pour évacuer les colis du vrac de colis sur le côté du convoyeur d'alimentation.

Ce type de mécanisme n'est pas optimisé pour le tri de colis à vitesse élevée ni pour l'évacuation d'un vrac de colis volumineux. De plus, l'espace utilisé sur le côté du convoyeur d'alimentation pour récupérer les colis non individualisables nécessite d'augmenter la surface au sol de l'installation de tri ce qui engendre des coûts de structure importants.

### Exposé de l'invention

La présente invention a pour but de répondre aux problèmes précités en proposant un procédé de tri de colis permettant d'améliorer la compacité de l'installation de tri tout en augmentant les performances de tri au niveau de l'alimentation du convoyeur d'injection.

La présente invention a donc pour objet un procédé de tri de colis pour alimenter en colis un convoyeur d'injection de colis à partir d'un vrac de colis convoyés sur un convoyeur d'alimentation selon une certaine direction de convoyage, dans lequel on forme une image du vrac de colis à l'aide d'une caméra disposée au dessus du convoyeur d'alimentation et on identifie à l'aide d'une unité de contrôle-commande un colis à individualiser présentant une surface de préhension sur le dessus non recouverte par un autre colis dans ladite image numérique du vrac de colis, ladite unité de contrôle-commande étant paramétrée pour piloter en retour un robot préhenseur de manière à récupérer ledit colis à individualiser et à le déposer sur le convoyeur d'injection, caractérisé en ce que l'unité de contrôle-commande est paramétrée pour déterminer, à partir de ladite image numérique du vrac de colis, l'absence de colis pouvant être individualisé parmi les colis du vrac de colis et à commander en retour la rétractation d'une portion de convoyage rétractable, qui s'étend à une extrémité aval du convoyeur d'alimentation dans la direction de convoyage et sur laquelle chaque image numérique du vrac de colis est formée, d'une position déployée dans laquelle la portion de convoyage rétractable vient à fleur du convoyeur d'injection, à une position rétractée dans laquelle la portion de convoyage rétractable est rétractée dans le sens contraire à ladite direction de convoyage, de manière à faire chuter les colis du vrac de colis par gravité sous le convoyeur d'alimentation.

Le procédé de tri selon l'invention peut également présenter la caractéristique suivante :
- l'unité de contrôle-commande est paramétrée pour piloter le robot préhenseur afin d'alimenter un autre convoyeur d'injection agencé pour venir à fleur de la portion de convoyage rétractable du convoyeur d'alimentation lorsqu'elle est en position déployée et en ce que l'unité de contrôle-commande est paramétrée pour piloter le robot préhenseur afin d'alimenter en colis les convoyeurs d'injection en alternance et en synchronisation de sorte que les convoyeurs d'injection alimentent à leur tour un convoyeur principal de tri avec les colis individualisés en respectant un certain pas entre chaque colis.

L'invention s'étend également à une installation de tri de colis comprenant un convoyeur d'injection de colis conçu pour injecter des colis sur un convoyeur de tri principal et un convoyeur d'alimentation conçu pour convoyer les colis en vrac selon une certaine direction de convoyage et alimenter le convoyeur de tri en colis en série, ladite installation comprenant une caméra disposée au dessus du convoyeur d'alimentation apte à former une image du vrac de colis et une unité de contrôle-commande paramétrée pour identifier un colis à individualiser présentant une surface de préhension sur le dessus non recouverte par un autre colis dans ladite image numérique du vrac de colis, ladite unité de contrôle-commande étant paramétrée pour piloter en retour un robot préhenseur de manière à récupérer ledit colis à individualiser et à le déposer sur le convoyeur d'injection, caractérisée en ce qu'elle comprend une portion de convoyage rétractable, qui s'étend à une extrémité aval du convoyeur d'alimentation dans la direction de convoyage et sur laquelle chaque image numérique du vrac de colis est formée, et en ce que l'unité de contrôle-commande est paramétrée pour déterminer, à partir de ladite image numérique du vrac de colis, l'absence de colis pouvant être individualisé parmi les colis du vrac de colis et à commander en retour la rétractation de la portion de convoyage rétractable d'une position déployée dans laquelle la portion de convoyage rétractable vient à fleur du convoyeur d'injection, à une position rétractée dans laquelle la portion de convoyage rétractable est rétractée dans le sens contraire à ladite direction de convoyage, de manière à faire chuter les colis du vrac de colis par gravité sous le convoyeur d'alimentation.

L'installation de tri selon l'invention peut également présenter les caractéristiques suivantes :
- elle comprend un autre convoyeur d'injection agencé pour venir à fleur de la portion de convoyage rétractable du convoyeur d'alimentation lorsqu'elle est en position déployée et en ce que l'unité de contrôle-commande est paramétrée pour piloter le robot préhenseur afin d'alimenter en colis les convoyeurs d'injection en alternance et en synchronisation de sorte que les convoyeurs d'injection alimentent à leur tour un convoyeur de tri principal avec les colis individualisés en respectant un certain pas entre chaque colis ;
- elle comprend un convoyeur de rejet disposé sous la portion de convoyage rétractable et s'étendant jusqu'à l'extrémité amont du convoyeur d'alimentation pour alimenter le convoyeur d'alimentation en colis.

L'idée à la base de l'invention est d'utiliser la capacité rétractable du convoyeur d'alimentation pour évacuer les colis sous le convoyeur d'alimentation entre le convoyeur d'injection et le convoyeur d'alimentation.

L'espace utilisé pour l'évacuation des colis non individualisables est ainsi réduit tout comme la distance maximale de déplacement du robot préhenseur pour déplacer les colis du convoyeur d'alimentation sur le convoyeur d'injection.

En effet, le robot préhenseur peut ainsi être disposé au plus près de la zone de préhension des colis du vrac de colis ce qui permet de réduire les temps d'aller-retour entre le convoyeur d'alimentation et le convoyeur d'injection.

In fine, l'invention permet d'augmenter la vitesse d'évacuation des colis non individualisables pour donner du temps de tri aux colis individualisables.

### Brève description des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la [Fig.1] est une représentation schématique de l'installation de tri de colis selon l'invention en vue de dessus adaptée pour mettre en œuvre le procédé selon l'invention ;
- la [Fig.2] est une représentation schématique de l'installation de tri de colis en vue de côté adaptée pour mettre en œuvre le procédé selon l'invention ;
- la [Fig.3] est un diagramme qui reprend les étapes de mises en œuvre du procédé selon l'invention.

### Description détaillée de l'invention

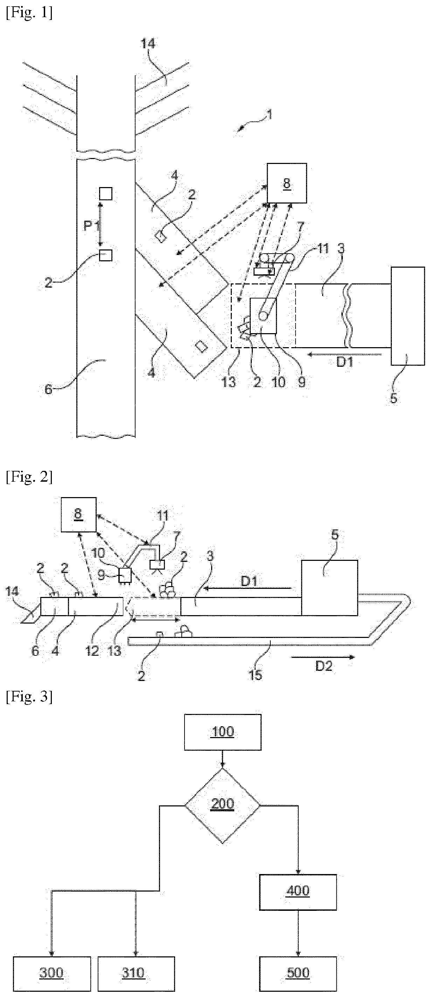

Le procédé de tri de selon l'invention est particulièrement bien adapté pour être mis en œuvre dans une installation de tri 1 de colis 2, représentées en figures 1 et 2, dans laquelle les colis 2 sont convoyés en vrac sur un convoyeur d'alimentation 3 puis individualisés sur un convoyeur d'injection 4.

Par colis 2, on entend tout type d'objet habituellement trié dans les centres de tri postaux ou plateformes logistiques, tels que les Petits Paquets Imports également appelés PPI.

Le convoyeur d'alimentation 3 se présente ici sous la forme d'un convoyeur linaire sur lequel les colis 2 sont convoyés en vrac selon une certaine direction de convoyage D1.

L'alimentation en colis 2 du convoyeur d'alimentation 3 se fait généralement par une entrée d'alimentation 5 en colis 2 qui alimente le convoyeur d'alimentation 3 avec des colis 2 disposés en vrac. Un dispositif de dévraquage de colis 2 peut également venir équiper l'entrée d'alimentation 5 afin de dégrossir le travail d'individualisation de colis 2 en amont du processus d'individualisation.

De son côté, le convoyeur d'injection 4 se présente sous la forme d'un convoyeur linéaire conçu pour convoyer les colis 2 en série et pour alimenter en colis 2 un convoyeur de tri principal 6 en suivant un certain pas P1 entre les colis 2. L'utilisation d'un convoyeur de tri principal 6 est courante dans le domaine du tri de colis 2 pour trier les colis 2 dans des sorties de tri 14 appropriées choisies en fonction d'une certaine indication de tri lue sur chacun des colis 2.

Ainsi, le but de l'invention est d'optimiser l'individualisation des colis 2 sur le convoyeur d'injection 4 à partir d'un vrac de colis 2 déposés sur le convoyeur d'alimentation 3 afin d'accélérer en retour l'injection des colis 2 sur le convoyeur de tri principal 6.

L'installation de tri 1 comprend pour cela une caméra 7 disposée au dessus du convoyeur d'alimentation 3 de manière à former une image numérique du vrac de colis 2. Chaque image formée par la caméra 7 est envoyée ensuite à une unité de contrôle-commande 8 de l'installation de tri 1 qui traite les données numériques issues de l'image numérique. L'unité de contrôle-commande 8 peut donc identifier, dans chaque image numérique du vrac de colis 2 formée par la caméra 7, un colis 2 à individualiser présentant une surface de préhension sur le dessus non recouverte par un autre colis 2.

L'unité de contrôle-commande 8 peut utiliser notamment la méthode du détourage afin de déterminer le contour de chaque colis 2 et d'en déduire leur agencement tridimensionnel sur le convoyeur d'alimentation 3. L'unité de contrôle-commande 8 peut également identifier d'autres paramètres tels que la taille des colis 2, l'espacement entre les colis 2 et l'inclinaison de chaque colis 2 afin d'améliorer la précision et l'efficacité de préhension des colis 2.

Il est entendu que l'invention ne se limite pas aux paramètres listés ci-avant et que l'unité de contrôle-commande 8 pourra être configurée pour identifier d'autres paramètres permettant d'optimiser davantage l'individualisation des colis 2.

Le dispositif d'individualisation de l'installation de tri 1 est un robot préhenseur 9 à ventouses conçu pour saisir un colis 2 par aspiration. Ce robot préhenseur 9 comprend typiquement un bras télescopique 10 terminé par une tête de préhension 11 à partir de laquelle s'étendent des ventouses 12.

Le robot préhenseur 9 est ici piloté par l'unité de contrôle-commande 8 pour venir récupérer le colis 2 à individualiser et le déposer sur le convoyeur d'injection 4 en réponse à l'identification d'un colis 2 à individualiser dans l'image numérique.

De manière avantageuse, le convoyeur d'injection 4 présente une portion de convoyage rétractable 13, représentée en pointillée sur les figures 1 et 2, qui s'étend à une extrémité aval du convoyeur d'alimentation 3 dans la direction de convoyage D1 et sur laquelle l'image numérique du vrac de colis 2 est formée.

Ainsi, l'unité de contrôle-commande 8 est également paramétrée pour déterminer à partir de l'image numérique du vrac de colis 2 l'absence de colis 2 pouvant être individualisé parmi les colis 2 du vrac de colis 2 et pour commander en retour la rétractation de la portion de convoyage rétractable 13.

L'unité de contrôle-commande 8 peut bien entendu identifier dans un premier temps des colis 2 à individualiser dans le vrac de colis 2 puis après individualisation de ces colis 2 sur le convoyeur d'injection 4, ne plus pouvoir identifier d'autres colis 2 individualisables dans le vrac de colis 2.

La portion de convoyage rétractable 13 peut ainsi être rétractée d'une position déployée dans laquelle la portion de convoyage rétractable vient à fleur du convoyeur d'injection 4, comme visible en pointillés sur les figures 1 et 2, à une position rétractée dans laquelle la portion de convoyage rétractable 13 est rétractée dans le sens contraire à la direction de convoyage D1, correspondant à la portion aval dans la direction de convoyage D1 du convoyeur d'alimentation 3, en trait plein sur les figures 1 et 2, de manière à faire chuter les colis 2 du vrac de colis 2 par gravité sous le convoyeur d'alimentation 3.

La portion de convoyage rétractable 13 peut bien sûr être déployée de la position rétractée à la position déployée directement après avoir évacuer les colis, de manière à permettre à un autre vrac de colis 2 d'être positionné sous la caméra 7 pour la formation d'une nouvelle image numérique.

La portion de convoyage rétractable 13 en position déployée est ici agencée pour venir à fleur du robot préhenseur 9 de manière à limiter les déplacements du bras 10 du robot préhenseur 9 et donc d'accélérer le processus d'individualisation.

La rétractation de la portion de convoyage rétractable 13 est faite dans un laps de temps très bref permettant de faire chuter les colis 2 sans les déplacer, ou très sensiblement, dans le sens contraire à la direction de convoyage D1 sur le convoyeur d'alimentation 3. Cette rétractation est permise par déplacement simultanée de la courroie et du tapis de convoyage du convoyeur d'alimentation 3.

L'installation de tri 1 peut également comprendre un convoyeur de rejet 15 qui s'étend sous la portion de convoyage rétractable 13. Le convoyeur de rejet 15 est parfaitement adapté pour réceptionner les colis 2 qui chutent depuis le convoyeur d'alimentation 3, convoyer les colis selon une certaine direction de convoyage D2 et alimenter le convoyeur d'alimentation 3 ou l'entrée d'alimentation 3 avec les colis 2 du vrac de colis 2 évacués.

L'installation de tri 1 peut enfin comprendre un autre convoyeur d'injection 4 agencé pour venir à fleur de la portion de convoyage rétractable 13 du convoyeur d'alimentation 3 lorsqu'elle est en position déployée de sorte que le robot préhenseur 9 alimente en colis 2 les convoyeurs d'injection 4 en alternance et en synchronisation sous le contrôle de l'unité de contrôle-commande 8. Les convoyeurs d'injection 4 sont ici agencés parallèlement et de manière oblique à la fois par rapport au convoyeur d'alimentation 3 et par rapport au convoyeur de tri principal 6. Le robot préhenseur 9 est quant à lui agencé de préférence entre les deux convoyeurs d'injection 4.

Il faut comprendre ici que les convoyeurs d'injection 4 ont une vitesse de convoyage croissante, d'une vitesse nulle V0 permettant la dépose du colis 2 individualisé par le robot préhenseur 9 en amont du convoyeur d'injection 4 à une vitesse de convoyage V1 proche ou égale à la vitesse de convoyage du convoyeur de tri principal 6 en aval du convoyeur d'injection 4, afin de faciliter l'injection des colis 2 sur le convoyeur de tri principal 6. Grâce à l'alimentation alternée et synchronisée en colis 2 des deux convoyeurs d'injection 4 à partir d'un même vrac de colis 2, la vitesse d'alimentation maximale n'est plus limitée à la vitesse d'injection des colis 2 sur le convoyeur de tri principal 6 ce qui permet in fine d'optimiser l'utilisation du robot préhenseur 9 et du convoyeur de tri principal 6.

Le procédé de tri selon l'invention, comme représenté sur le diagramme de la [Fig.3], peut être mis œuvre avec l'installation de tri 1 selon l'invention et consiste à:
- former, à une étape 100, une image du vrac de colis 2 à l'aide de la caméra 7 disposée au dessus du convoyeur d'alimentation 3 ;
- identifier à l'aide de l'unité de contrôle-commande 8, à une étape 200, la présence d'un colis 2 à individualiser présentant une surface de préhension sur le dessus non recouverte par un autre colis 2 dans ladite image numérique du vrac de colis 2 ou l'absence de colis pouvant être individualisé parmi les colis 2 du vrac de colis 2 ;
- en réponse à l'identification de la présence d'un colis 2 à individualiser, piloter à une étape 300, à l'aide de l'unité de contrôle-commande 8, le robot préhenseur 9 de manière à récupérer le colis 2 à individualiser et à le déposer sur le convoyeur d'injection 4 ;
- en réponse à l'absence d'identification de la présence d'un colis 2 à individualiser, commander à une étape 400, à l'aide de l'unité de contrôle-commande 8, la rétractation de la portion de convoyage rétractable 13 de la position déployée à la position rétractée, de manière à faire chuter les colis 2 du vrac de colis 2 par gravité sous le convoyeur d'alimentation 3.
- convoyer à l'étape 500 les colis évacués par gravité depuis la portion de convoyage rétractable 13 sur le convoyeur de rejet 15 pour alimenter le convoyeur d'alimentation 3 ou l'entrée d'alimentation 5.

Le procédé selon l'invention peut également comprendre une étape 310 d'optimisation de l'étape 300 consistant à piloter, à l'aide de l'unité de contrôle-commande 8, le robot préhenseur 9 afin d'alimenter l'autre convoyeur d'injection 4 agencé pour venir à fleur de la portion de convoyage rétractable 13 du convoyeur d'alimentation 3 lorsqu'elle est en position déployée de sorte que le robot préhenseur 9 alimente en colis 2 les deux convoyeurs d'injection 4 en alternance et en synchronisation.

## Revendications

1. Procédé de tri de colis (2) pour alimenter en colis (2) un convoyeur d'injection (4) de colis à partir d'un vrac de colis convoyés sur un convoyeur d'alimentation (3) selon une certaine direction de convoyage (D1), dans lequel on forme une image du vrac de colis à l'aide d'une caméra (7) disposée au dessus du convoyeur d'alimentation et on identifie à l'aide d'une unité de contrôle-commande (8) un colis à individualiser présentant une surface de préhension sur le dessus non recouverte par un autre colis dans ladite image numérique du vrac de colis, ladite unité de contrôle-commande étant paramétrée pour piloter en retour un robot préhenseur (9) de manière à récupérer ledit colis à individualiser et à le déposer sur le convoyeur d'injection, **caractérisé en ce que** l'unité de contrôle-commande est paramétrée pour déterminer, à partir de ladite image numérique du vrac de colis, l'absence de colis pouvant être individualisé parmi les colis du vrac de colis et à commander en retour la rétractation d'une portion de convoyage rétractable (13), qui s'étend à une extrémité aval du convoyeur d'alimentation dans la direction de convoyage et sur laquelle chaque image numérique du vrac de colis est formée, d'une position déployée dans laquelle la portion de convoyage rétractable vient à fleur du convoyeur d'injection, à une position rétractée dans laquelle la portion de convoyage rétractable est rétractée dans le sens contraire à ladite direction de convoyage, de manière à faire chuter les colis du vrac de colis par gravité sous le convoyeur d'alimentation.

2. Procédé de tri de colis selon la revendication 1, **caractérisé en ce que** l'unité de contrôle-commande est paramétrée pour piloter le robot préhenseur afin d'alimenter un autre convoyeur d'injection (4) agencé pour venir à fleur de la portion de convoyage rétractable du convoyeur d'alimentation lorsqu'elle est en position déployée et **en ce que** l'unité de contrôle-commande est paramétrée pour piloter le robot préhenseur afin d'alimenter en colis les convoyeurs d'injection en alternance et en synchronisation de sorte que les convoyeurs d'injection alimentent à leur tour un convoyeur de tri principal (6) avec les colis individualisés en respectant un certain pas entre chaque colis.

3. Installation de tri (1) de colis (2) comprenant un convoyeur d'injection (4) de colis conçu pour injecter des colis sur un convoyeur de tri principal (6) et un convoyeur d'alimentation (3) conçu pour convoyer les colis en vrac selon une certaine direction de convoyage (D1) et alimenter le convoyeur de tri en colis en série, ladite installation comprenant une caméra (7) disposée au dessus du convoyeur d'alimentation apte à former une image du vrac de colis et une unité de contrôle-commande (8) paramétrée pour identifier un colis à individualiser présentant une surface de préhension sur le dessus non recouverte par un autre colis dans ladite image numérique du vrac de colis, ladite unité de contrôle-commande étant paramétrée pour piloter en retour un robot préhenseur de manière à récupérer ledit colis à individualiser et à le déposer sur le convoyeur d'injection, **caractérisée en ce qu'**elle comprend une portion de convoyage rétractable (13), qui s'étend à une extrémité aval du convoyeur d'alimentation dans la direction de convoyage et sur laquelle chaque image numérique du vrac de colis est formée, et **en ce que** l'unité de contrôle-commande est paramétrée pour déterminer, à partir de ladite image numérique du vrac de colis, l'absence de colis pouvant être individualisé parmi les colis du vrac de colis et à commander en retour la rétractation de la portion de convoyage rétractable d'une position déployée dans laquelle la portion de convoyage rétractable vient à fleur du convoyeur d'injection, à une position rétractée dans laquelle la portion de convoyage rétractable est rétractée dans le sens contraire à ladite direction de convoyage, de manière à faire chuter les colis du vrac de colis par gravité sous le convoyeur d'alimentation.

4. Installation de tri de colis selon la revendication 3, **caractérisée en ce qu'**elle comprend un autre convoyeur d'injection (4) agencé pour venir à fleur de la portion de convoyage rétractable du convoyeur d'alimentation lorsqu'elle est en position déployée et **en ce que** l'unité de contrôle-commande est paramétrée pour piloter le robot préhenseur afin d'alimenter en colis les convoyeurs d'injection en alternance et en synchronisation de sorte que les convoyeurs d'injection alimentent à leur tour le convoyeur de tri principal avec les colis individualisés en respectant un certain pas entre chaque colis.

5. Installation de tri de colis selon la revendication 3 ou 4, **caractérisée en ce qu'**elle comprend un convoyeur de rejet (15) disposé sous la portion de convoyage rétractable et s'étendant jusqu'à l'extrémité amont du convoyeur d'alimentation pour alimenter le convoyeur d'alimentation en colis.

## Patentansprüche

1. Paketsortierverfahren zum Sortieren von Paketen (2) zum Zuführen von Paketen (2) zu einem Paketinjektionsförderer (4) aus einer Paketmenge, die auf einem Zuführförderer (3) in einer bestimmten Förderrichtung (D1) befördert werden, wobei ein Bild der Paketmenge mithilfe einer Kamera (7), die oberhalb des Zuführförderers angeordnet ist, erzeugt wird und mit Hilfe einer Steuer- und Regeleinheit (8) ein zu individualisierendes Paket identifiziert wird, das eine Greiffläche auf der Oberseite aufweist, die nicht von einem anderen Paket in dem digitalen Bild der Paketmenge verdeckt wird, wobei die Steuer- und Regeleinheit parametriert ist, um wiederum einen Greiferroboter (9) so zu steuern, dass er das zu individualisierende Paket aufnimmt und auf dem Injektionsförderer ablegt, **dadurch gekennzeichnet, dass** die Steuer- und Regeleinheit parametriert ist, um aus dem digitalen Bild der Paketmenge das Fehlen von Paketen, die unter der Paketmenge individualisiert werden können, zu bestimmen und dass er wiederum das Zurückziehen eines einziehbaren Förderabschnitts (13), der sich an einem nachgeschalteten Ende des Zuführförderers in Förderrichtung erstreckt und an dem jedes digitale Bild der Paketmenge erzeugt wird, von einer ausgeklappten Position, in der der einziehbare Förderabschnitt bündig mit dem Injektionsförderer abschließt, in eine zurückgezogene Position steuert, in der der einziehbare Förderabschnitt entgegen der Förderrichtung zurückgezogen ist, so dass die Pakete aus der Paketmenge durch die Schwerkraft unter den Zuführförderer fallen.

2. Paketsortierverfahren nach Anspruch 1, **dadurch gekennzeichnet, dass** die Steuer- und Regeleinheit parametriert ist, um den Greiferroboter so zu steuern, dass er einen anderen Injektionsförderer (4) versorgt, um in der ausgefahrenen Position bündig mit dem einziehbaren Förderabschnitt des Zuführförderers abzuschließen, und dadurch, dass die Steuer- und Regeleinheit parametriert ist, um den Greiferroboter so zu steuern, dass er Pakete abwechselnd und synchron dem Injektionsförderer zuführt, so dass die Injektionsförderer wiederum einzelne Pakete einem Hauptsortierförderer (6) zuführen, wobei zwischen den individualisierten Paketen ein bestimmter Abstand eingehalten wird.

3. Sortieranlage (1) für Pakete (2), umfassend einen Paketinjektionsförderer (4), der dazu ausgebildet ist, Pakete auf einen Hauptsortierförderer (6) einzuspeisen, und einen Zuführförderer (3), der dazu ausgebildet ist, die Paketmenge in eine bestimmte Förderrichtung (D1) zuzuführen und den Sortierförder mit Paketen in Serie zu versorgen, wobei die Anlage eine Kamera (7) umfasst, die oberhalb des Zuführförderers angeordnet ist, um ein Bild der Paketmenge zu erzeugen, und eine Steuer- und Regeleinheit (8) parametriert ist, um ein zu individualisierendes Paket zu identifizieren, das eine Greiffläche auf der Oberseite aufweist, die nicht von einem anderen Paket in dem digitalen Bild der Paketmenge verdeckt wird, wobei die Steuer- und Regeleinheit parametriert ist, um wiederum einen Greiferroboter so zu steuern, dass er das zu individualisierende Paket aufnimmt und auf dem Injektionsförderer ablegt, **dadurch gekennzeichnet, dass** sie einen einziehbaren Förderabschnitt (13) umfasst, die sich an einem nachgeschalteten Ende des Zuführförderers in Förderrichtung erstreckt und an dem jedes digitale Bild der Paketmenge erzeugt wird, und wobei die Steuer- und Regeleinheit parametriert ist, um aus dem digitalen Bild der Paketmenge das Fehlen von Paketen, die unter der Paketmenge individualisiert werden können, zu bestimmen und dass er wiederum das Zurückziehen eines einziehbaren Förderabschnitts von einer ausgeklappten Position, in der der einziehbare Förderabschnitt bündig mit dem Injektionsförderer abschließt, in eine zurückgezogene Position steuert, in der der einziehbare Förderabschnitt entgegen der Förderrichtung zurückgezogen ist, so dass die Pakete aus der Paketmenge durch die Schwerkraft unter den Zuführförderer fallen.

4. Sortieranlage für Pakete nach Anspruch 3, **dadurch gekennzeichnet, dass** sie einen weiteren Injektionsförderer (4) umfasst, der so angeordnet ist, dass er in der ausgefahrenen Position bündig mit dem einziehbaren Förderabschnitt des Zuführförderers abschließt, und dass die Steuer- und Regeleinheit parametriert ist, um den Greiferroboter so zu steuern, dass er Pakete abwechselnd und synchron den Injektionsförderern zuführt, so dass die Injektionsförderer wiederum einzelne Pakete einem Hauptsortierförderer zuführen, wobei zwischen den individualisierten Paketen ein bestimmter Abstand eingehalten wird.

5. Sortieranlage für Pakete nach Anspruch 3 oder 4, **dadurch gekennzeichnet, dass** sie einen unter dem einziehbaren Förderabschnitt angeordneten Ausschleuseförderer (15) umfasst, der sich bis zum vorgelagerten Ende des Zuführförderers erstreckt, um Pakete zum Zuführförderer zuzuführen.

## Claims

1. A method for sorting packages (2) for feeding packages (2) to a package injection conveyor (4) from a bulk of packages conveyed on a feed conveyor (3) in a certain conveying direction (D1), wherein an image of the bulk of packages is formed using a camera (7) disposed above the feed conveyor and a package to be individualised having a gripping surface on the top not covered by another package is identified using a control-command unit (8) in said digital image of the bulk of packages, said control-command unit being configured to control in return a gripper robot (9) so as to retrieve said package to be individualised and deposit it on the injection conveyor, **characterised in that** the control-command unit is configured to determine, from said digital image of the bulk of packages, the absence of packages that can be individualised among the packages of the bulk of packages and controlling in return the retraction of a retractable conveying portion (13), which extends to a downstream end of the feed conveyor in the conveying direction and on which each digital image of the bulk of packages is formed, from a deployed position in which the retractable conveying portion comes flush with the injection conveyor, to a retracted position in which the retractable conveying portion is retracted in the opposite direction to said conveying direction, so as to drop the packages from the bulk of packages by gravity under the feed conveyor.

2. The method for sorting packages according to claim 1, **characterised in that** the control-command unit is configured to control the gripper robot in order to feed another injection conveyor (4) arranged to come flush with the retractable conveying portion of the feed conveyor when it is in the deployed position and **in that** the control-command unit is configured to control the gripper robot in order to alternately feed packages to the injection conveyors and synchronised so that the injection conveyors in turn feed a main sorting conveyor (6) with the individualised packages while keeping a certain spacing between each package.

3. A facility (1) for sorting packages (2) comprising a package injection conveyor (4) designed to inject packages onto a main sorting conveyor (6) and a feed conveyor (3) designed to convey the bulk of packages in a certain conveying direction (D1) and feed the sorting conveyor with packages in series, said facility comprising a camera (7) disposed above the feed conveyor capable of forming an image of the bulk of packages and a control-command unit (8) configured to identify a package to be individualised having a gripping surface on the top not covered by another package in said digital image of the bulk of packages, said control-command unit being configured to control in return a gripper robot so as to retrieve said package to be individualised and deposit it on the injection conveyor, **characterised in that** it comprises a retractable conveying portion (13), which extends to a downstream end of the feed conveyor in the conveying direction and on which each digital image of the bulk of packages is formed, and **in that** the control-command unit is configured to determine, from said digital image of the bulk of packages, the absence of packages which can be individualised among the packages of the bulk of packages and to control in return the retracting of the retractable conveying portion from a deployed position in which the retractable conveying portion comes flush with the injection conveyor, to a retracted position in which the retractable conveying portion is retracted in the opposite direction to said conveying direction, so as to drop the packages from the bulk of packages by gravity under the feed conveyor.

4. The facility for sorting packages according to claim 3, **characterised in that** it comprises another injection conveyor (4) arranged to come flush with the retractable conveying portion of the feed conveyor when it is in the deployed position and **in that** the control-command unit is configured to control the gripper robot in order to feed packages to the injection conveyors alternately and synchronously so that the injection conveyors in turn supply the main sorting conveyor with the individualised packages while keeping a certain spacing between each package.

5. The facility for sorting packages according to claim 3 or 4, **characterised in that** it comprises a reject conveyor (15) disposed below the retractable conveying portion and extending to the upstream end of the feed conveyor to feed the package feed conveyor.
